# EUROPEAN PATENT SPECIFICATION

(11) **EP 3 039 278 B1**
(45) Date of publication and mention of the grant of the patent: **19.06.2019**
(21) Application number: 14766069.0
(22) Date of filing: 28.08.2014
(51) Int. Cl.: F02M 21/02, F02M 63/00, F16K 31/40, F16K 39/02

(54) **PILOT-OPERATED VALVE**
PILOTBETÄTIGTES VENTIL
VANNE À ACTIONNEMENT PILOTE

(30) Priority: 28.08.2013 US 201361870985 P
(43) Date of publication of application: 06.07.2016
(73) Proprietor: Parker-Hannifin Corporation, Cleveland, OH 44124 (US)
(72) Inventor: ZEINER, Robert William, Torrington, Connecticut 06790 (US)
(74) Representative: Orr, Robert
(86) International application number: PCT/US2014/053189
(87) International publication number: WO 2015/031633

(56) References cited:
- EP-A1- 2 573 438
- EP-A2- 1 435 495
- US-A- 4 526 340
- US-A- 4 679 765
- US-B2- 7 762 520

## Description

The present invention relates generally to flow control devices, and more particularly to pilot-operated valves for use with vehicles.

Natural gas may be used as a vehicle engine fuel to provide environmental benefits over fuels such as diesel. The natural gas is stored in a highly compressed form, and the high pressure gas is fed through a regulator where the pressure is lowered and regulated and the feed of the fuel controlled before being fed to the engine. A valve may be provided between the fuel storage and the engine that is movable between an open position allowing flow from the fuel storage to the engine and a closed position prevent flow from the fuel storage to the engine.

EP-A-2573438 discloses a pilot-operated electromagnetic valve which includes a plunger and a fixed iron core arranged in an axial direction so as to be movable relatively with each other, and also includes a solenoid to generate an electromagnetic force for moving the plunger integrally with a pilot valve. The valve includes a spring for stopping the pilot valve at a balanced position by exerting an elastic force on the pilot valve in an opposite direction to the electromagnetic force. A main valve element opens or closes the main valve relative to the main valve seat. A spring for biasing the main valve element to the valve-closing direction is interposed between the main valve element and the upper surface of a back-pressure chamber. The end of the main valve element which contacts the spring is biased away from the end of the plunger which contacts the spring when the plunger is in the position which allows flow through the pilot orifice.

US-7762520 discloses a servo valve which is operable in vacuum systems and can be switched between an open and a closed state. The valve has a closure member in the shape of a piston, which moves between an open and a closed position under influence of a difference between a control pressure of a control chamber and the pressures of an intake and an outlet, respectively. The control chamber is in constant fluid communication with the intake, and in adjustable fluid communication with the outlet to influence the control pressure mainly by the intake pressure and the outlet pressure depending on the adjustable fluid communication. The closure member is arranged so that it can be released from a seat, vacuum in the outlet then evacuating the control chamber, and an upwardly directed force caused by the pressure differential between the pressure in the intake and the pressure in the control chamber and outlet part, respectively, starts to build up. A resulting force moves the closure member upwardly from its closed position to its open position. A ring of the piston has an inner surface facing towards the piston and an outer surface facing towards a wall of a cylindrical cavity of the housing. Due to the stepped outer surface, ventilating passages are formed between the wall and the parts of the peripheral surface of the ring wherein the radial size is smallest.

The present invention provides a valve having a movable valve member with an orifice, a plunger movable to block/allow flow through the orifice, and a resilient biasing member connecting the valve member to the plunger. When the plunger is moved to a position allowing flow, fluid flows through the orifice creating a pressure differential in the valve that in combination with the resilient biasing member moves the valve member to a position allowing flow through a main passageway of the valve. During a low or no flow condition, the valve member is held in the position allowing flow to prevent a drop in performance of a system utilizing the valve that would result if the valve member moved to a blocking position.

The invention therefore provides a valve as defined in claim 1.

The resilient biasing member may be a spring having one end fixed to the plunger and an opposite end fixed to the valve member such that the valve member is hung from the plunger.

When the plunger is moved to the second position, fluid flows through the pilot orifice creating a pressure differential between the control chamber and the point downstream of the valve seat that in combination with the resilient biasing member moves the valve member to the second position allowing flow through the main passageway from the inlet port through the valve seat to the outlet port.

The valve includes a bleed orifice in communication with the inlet port and the control chamber for allowing pressure from the inlet port to build up in the control chamber for urging the valve member in the first position when the plunger is in the first position.

The pilot orifice may have a cross-sectional area that is greater than a cross-sectional area of the bleed orifice.

The invention also provides a method as defined in claim 15.

The foregoing and other features of the invention are hereinafter described in greater detail with reference to the accompanying drawings.
Fig. 1 is a perspective view of a pilot-operated valve.
Fig. 2 is another perspective view of the pilot-operated valve.
Fig. 3 is a bottom view of the pilot-operated valve.
Fig. 4 is a top view of the pilot-operated valve.
Fig. 5 is a left side view of the pilot-operated valve.
Fig. 6 is a right side view of the pilot-operated valve.
Fig. 7 is an exploded view of the pilot-operated valve.
Fig. 8 is a cross-sectional view taken about line 8-8 in Fig. 6 showing the pilot-operated valve in a de-energized position.
Fig. 9 is a cross-sectional view of the pilot-operated valve in an energized position.
Fig. 10 is another cross-sectional view of the pilot-operated valve in the de-energized position.
Fig. 11 is a cross-sectional view of the pilot-operated valve after a coil has been energized.
Fig. 12 is a cross-sectional view of the pilot-operated valve in the energized position after the coil has been energized and a valve member moved away from a valve seat.
Fig. 13 is a cross-sectional view of the pilot-operated valve after a coil has been de-energized and before the valve member has moved towards the valve seat.
Fig. 14 is another cross-sectional view of the pilot-operated valve after a coil has been de-energized and before the valve member has moved towards the valve seat.

The invention is applicable to pilot-operated valves that serve as a safety shutoff valve between a compressed natural gas supply and an engine of a vehicle serving as a redundancy for shutting off the engine, and thus will be described below chiefly in this context. The invention may be applicable to other systems using a shutoff valve.

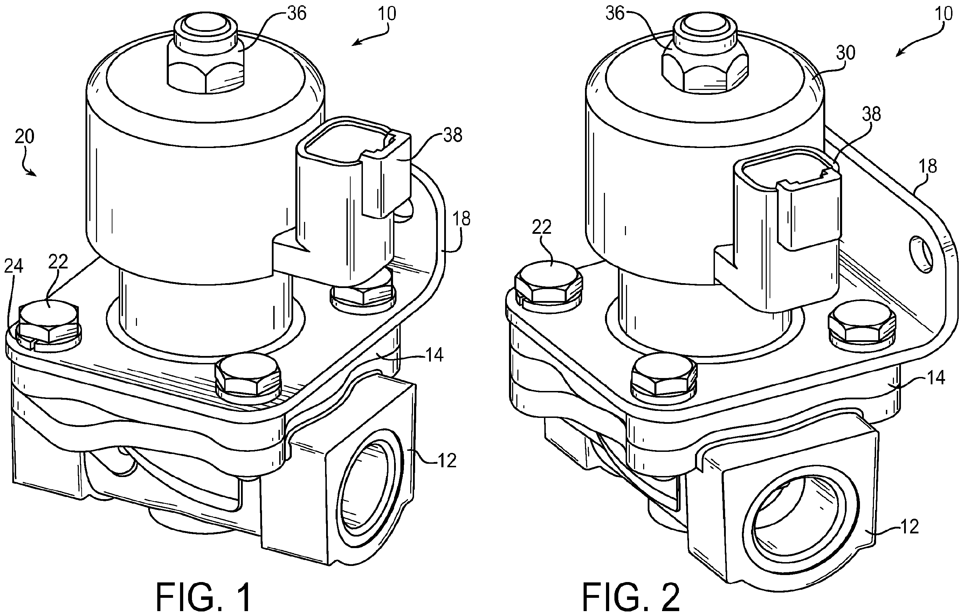

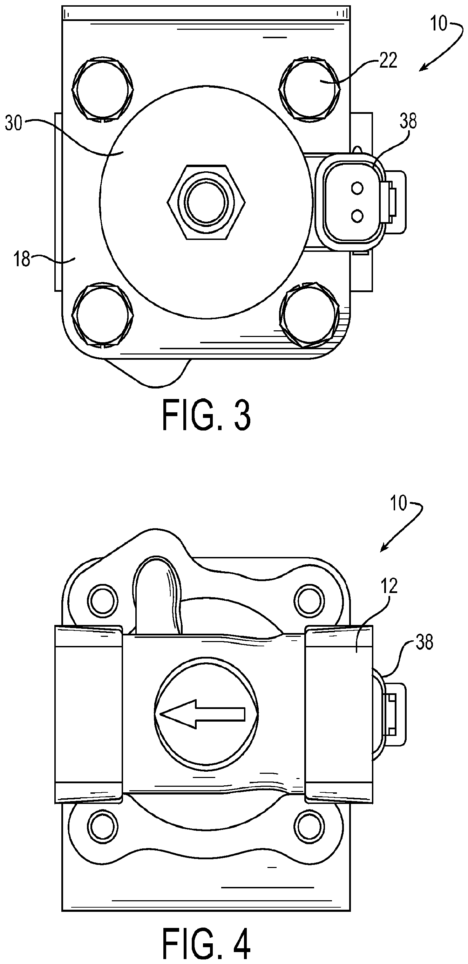

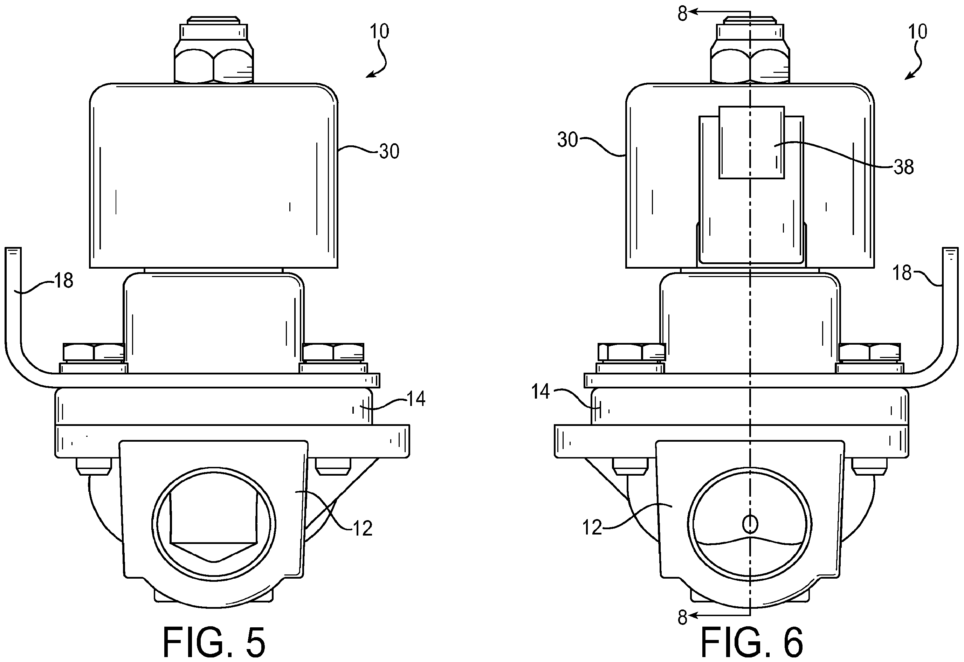

Referring to the drawings, and initially to Figs. 1-7, an exemplary pilot-operated valve is illustrated generally at reference numeral 10. The valve includes a body, which includes valve body 12 and cover 14 sealed to the body 12 by a suitable seal 16, such as an o-ring, a bracket 18 for mounting the valve 10 to a vehicle, and a solenoid assembly 20 coupled to the cover 14. The valve body 12, cover 14 and bracket 18 are coupled together by suitable fasteners 22, such as bolts, extending through openings in the valve body 12, cover 14, and bracket 18, and washers 24, such as lock washers, are provided between the fasteners 22 and bracket 18.

The solenoid assembly 20 is coupled to the cover 14 in any suitable manner, such as by a threaded connection, and is sealed to the cover 14 by a suitable seal 26, such as an o-ring. The solenoid assembly 20 includes a coil assembly 30, a plunger 32 that is axially movable under the magnetic influence of the coil assembly 30, a sleeve 34 in which the plunger is axially moved, a nut 36 coupled to sleeve 34 to secure the sleeve relative to the coil assembly 30, and a coupling device 38 configured to be coupled to a control device, such as an engine controller that energizes/de-energizes the assembly 30. The sleeve 34 may be a laser welded sleeve having threaded ends that are magnetic stainless steel, for example, and a central tube that is a non-magnetic series stainless steel, for example, which can create a magnetic circuit to drive the attraction between the stop and the plunger 80 when energized.

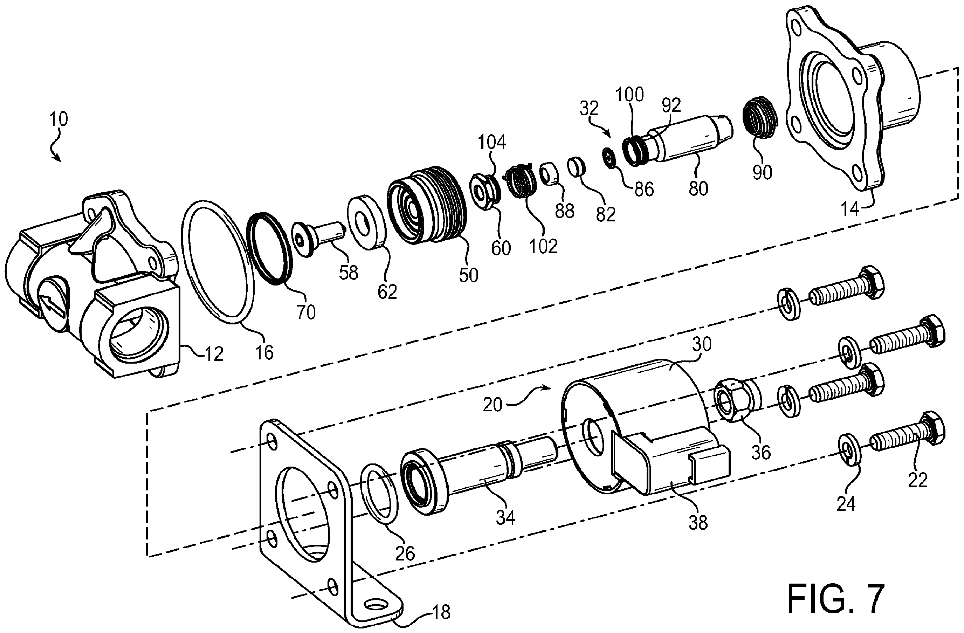

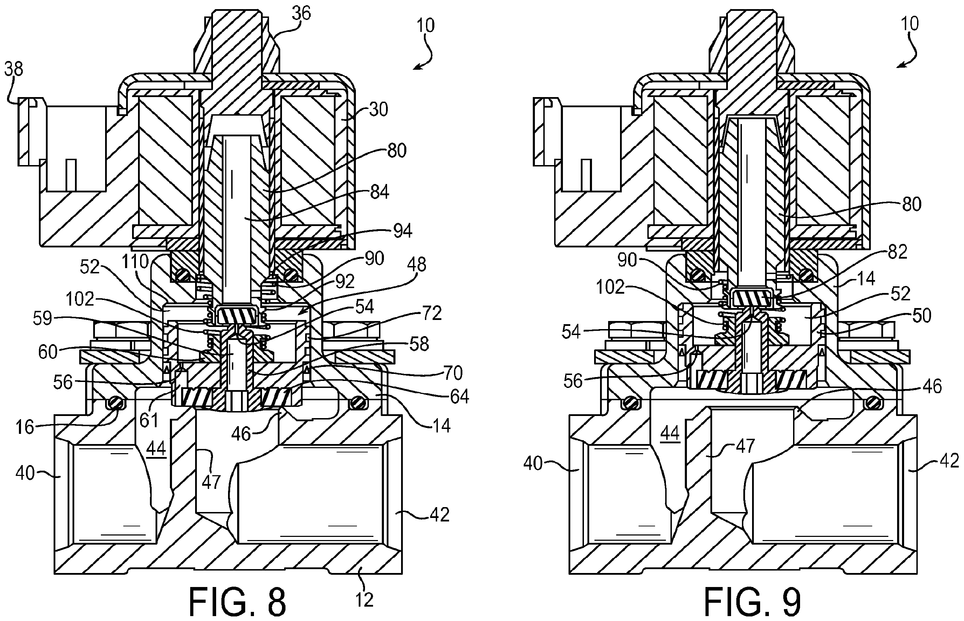

Turning now to Fig. 7 in addition to Fig. 8, the valve body 12 has an inlet port 40, an outlet port 42 in selective fluid communication with the inlet port 40 by a main passageway 44 through the valve, and a valve seat 46 surrounding the main passageway 44. The valve body 12 includes a wall 47, an upper portion of which forms the valve seat 46, which directs the flow from the inlet port 40 through the main passageway 44 upward towards the valve seat 46. Fluid, such as compressed natural gas, can then flow through the valve seat 46 along the main passageway 44 to the outlet port 42 when a valve member 48 is moved away from the valve seat 46. Although described as being part of the valve body 12, it will be appreciated that the valve seat 46 may be separate from the valve body 12.

The valve member 48 is mounted in the body between the valve body 12 and cover 14 for movement between a first position blocking flow through the valve seat 46 and a second position permitting flow through the valve seat 46. The valve member 48 has a piston portion 50 that separates a control chamber 52 upstream of the valve seat 46 from a point downstream of the valve seat 46, a pilot orifice 54 through the piston portion 50, and a bleed orifice 56 in communication with the inlet 40 and the control chamber 52. The bleed orifice 56 allows pressure from the inlet 40 to build up in the control chamber 52 for urging the valve member 48 in the closed position when the coil assembly 30 is de-energized. Although shown as extending through the piston portion 50, it will be appreciated that the bleed orifice 56 may be formed in the valve body 12 or cover 14.

The pilot orifice 54, which is provided for bleeding off pressure from the control chamber 52 to the point downstream of the valve seat 46, has a cross-sectional area that is greater than a cross-sectional area of the bleed orifice 56. The pilot orifice 54 and a pilot passage 59 are shown extending through an orifice member 58 that extends through the piston portion 50 and is coupled to the piston portion by a coupling device 60, such as a nut threadably engaged to an end of the orifice member 58. Sandwiched between the orifice member 58 and the piston portion 50 is a suitable seal 62 that seals the valve member 48 to the valve seat 46 in the closed position. The pilot orifice 54 and pilot passage 59 extend through the orifice member 58 and the pilot passage 59 opens to a bottom of the piston portion 50 interiorly of the seal 62, and the bleed orifice 56 and passage 61 open radially outwardly of the seal 62. The seal 62 may protrude into the bleed passage 61 to serve as a debris trap to shield debris from entering the bleed orifice 56. The piston portion 50 includes one or more ribs 64 and the orifice member 58 includes one or more ribs (not shown) that engage the seal 62 creating a high stress area for high pressure sealing.

The valve 10 additionally includes a seal member 70 surrounding the piston portion 50 for sealing the piston portion 50 to the cover 14, for providing frictional damping, and for serving as a bearing between the piston portion 50 and cover 14 as the piston portion is moved axially relative to the cover 14. The seal member 70 has a spring portion that urges the seal member 70 radially outward to accommodate for wear and to cause the seal member 70 to serve as a scraper to clean a piston bore of the cover 14. The piston portion 50 includes one or more debris glands 72 on a radially outer wall of the piston portion that serve to lighten the piston portion 50 and collect the debris from the scraper generated by piston wear or debris/contaminants which made it past the bleed orifice 56.

Referring now to the plunger 32 in detail, the plunger is movable between a first position blocking flow through the pilot orifice 54 when the coil assembly 30 is de-energized and a second position allowing flow through the pilot orifice 54 when the coil assembly 30 is energized. The plunger 32 includes a plunger member 80 movable under the magnetic influence of the coil assembly 30, a seal 82 disposed in a bore 84 of the plunger member 80 for sealing the pilot orifice 54 when the plunger is in the first position, a washer 86 abutted by the seal 82 and seated against a ledge in the bore 84, and a retainer 88 secured to the plunger member 80 in the bore 84 in any suitable manner to retain the seal 82 within the bore 84.

The plunger member 80 is biased in first position by a resilient member 90, such as a spring, that has one end seated on a ledge 92 on an outer portion of the plunger member 80 and an opposite end seated on a ledge 94 of the sleeve 34. The plunger member 80 has a taper at an upper portion thereof, for example a fifteen degree taper, which allows for a longer magnetic stroke to improve magnetic efficiency.

The plunger member 80 also includes a groove 100 formed on the outer portion thereof for receiving a resilient biasing member 102, such as a spring, such as a tension spring, that is configured to hold the valve member 48 away from the valve seat 46 and couples the plunger member 80 to the valve member 48. The resilient biasing member 102 is fixed at one end to the plunger member 80 in the groove and has an opposite end fixed to the valve member 48, and as shown fixed to the nut 60 in an outer groove 104 thereof, such that the valve member 48 is hung from the plunger member 80, for example with a light attractive force or bias. As is discussed in detail below, when the plunger member 80 is in the second position where the seal 82 is unseated from the pilot orifice 54, when there is low or no flow through the main passageway 44, the resilient biasing member 102 resiliently biases the valve member 48 in the second position away from the valve seat 46. In this way, during the low or no flow condition, such as when a vehicle operator has let off of the throttle of the vehicle, the valve member 48 will be held in the second position to prevent a drop in performance of the vehicle that would otherwise occur if the valve member 48 was allowed to move to the first position during the low or no flow condition.

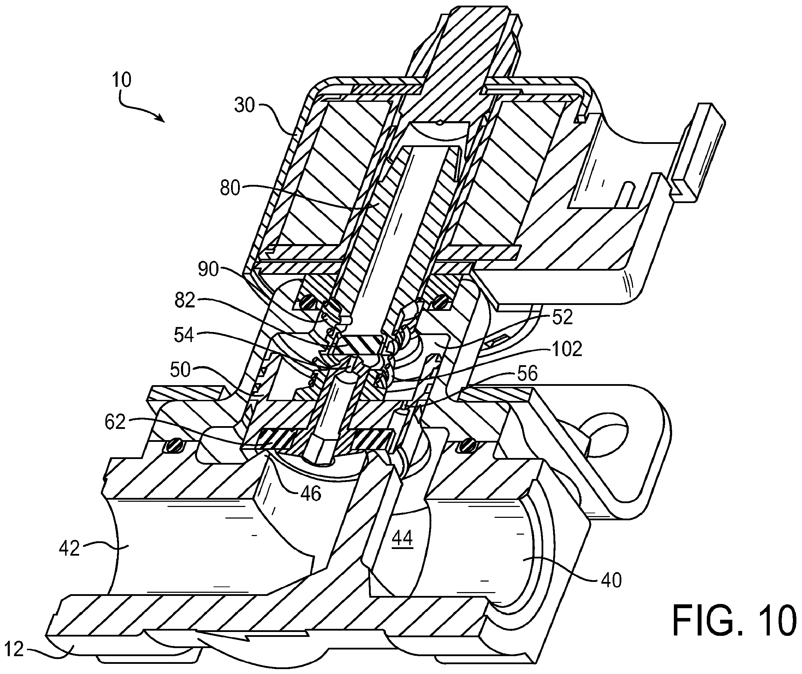

As shown in Fig. 10, when the valve 10 is installed in a vehicle between the fluid source and the engine and when the vehicle is off, the coil assembly 30 is de-energized and the resilient member 90 biases the plunger member 80 in the first position blocking flow through the pilot orifice 54 and holding the valve member 48 in the first position blocking flow through the valve seat 46. Fluid flows from the fluid source to the inlet port 44 and through the main passageway 44, where the fluid flows through the bleed orifice 56 and fills the control chamber 52. The piston portion 50 has a larger diameter than the valve seat 46 and the pressure at the point downstream of the valve seat 46 is lower than the inlet pressure, and thus the pressure of the fluid in the control chamber 52 acts on the piston portion 50 to hold the valve member 48 in the first position blocking flow through the valve seat 46.

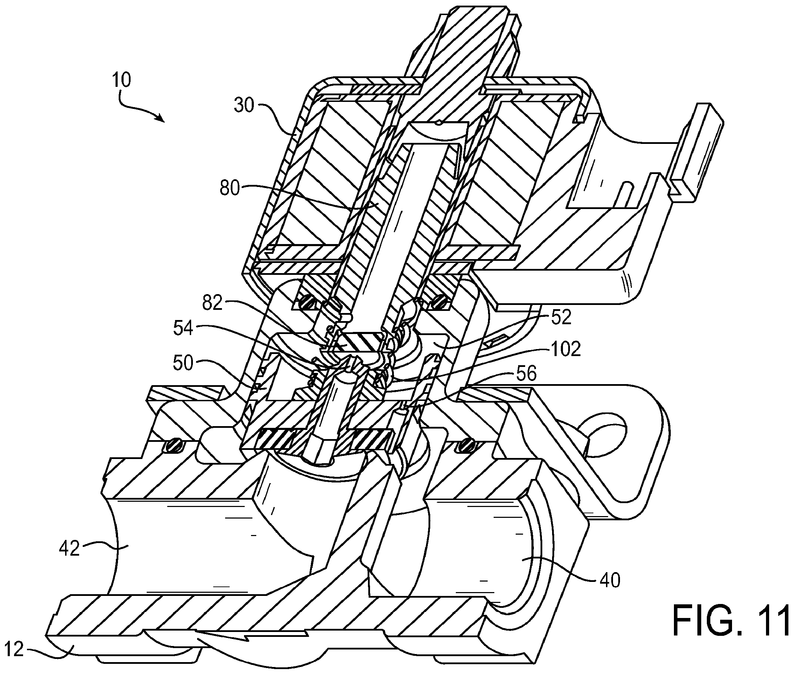

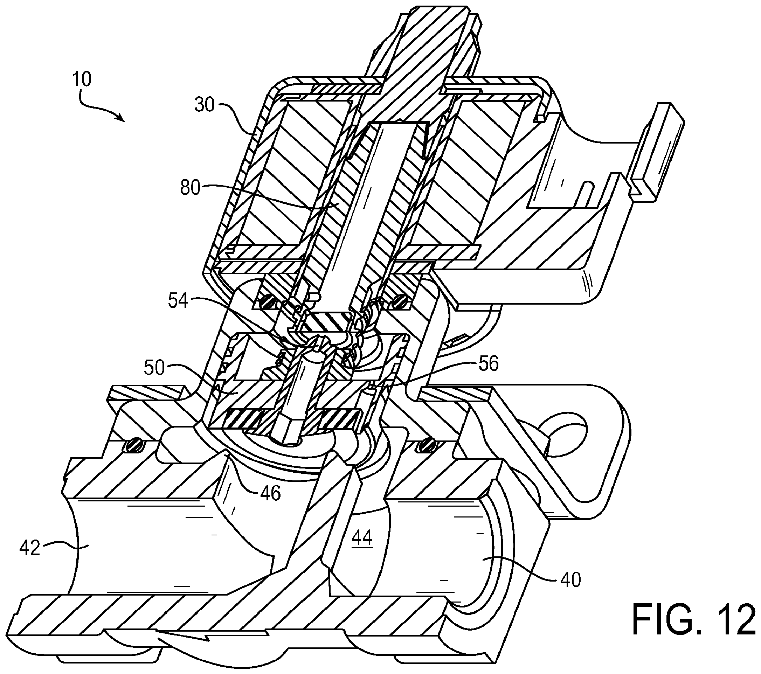

As shown in Fig. 11, when the vehicle is started up, for example, a controller in the vehicle may energize the coil assembly 30, which causes the plunger member 80 to move axially upward unseating the seal 82 from the pilot orifice 54 and moving the plunger member 80 to the second position allowing flow through the pilot orifice 54. The fluid in the control chamber 52 then flows through the pilot orifice 54 to the area downstream of the valve seat 46. The pilot orifice 54 has a cross-sectional area that is greater than a cross-sectional area of the bleed orifice 56, for example a ratio of three to one, and thus the fluid flows to the point downstream of the valve seat 46 faster than the fluid fills the control chamber 52. As shown in Fig. 12, the fluid flowing through the pilot orifice 54 thereby creates a pressure differential between the control chamber 52 and the point downstream of the valve seat 46 that in combination with the resilient biasing member 102 moves the valve member 48 from the first position to the second position where the piston portion 50 contacts a shoulder 110 in the cover 14 that serves as a stop. As the piston portion 50 moves from the first position to the second position, fluid flows through the main passageway 44 from the inlet port 40 through the valve seat 46 to the outlet port 42. While the coil assembly 30 is energized, the seal 82 of the plunger remains unseated from the pilot orifice 54 so that a pressure force holds the piston portion 50 against the stop 110.

If the inlet pressure is low such that the pressure differential is not sufficient to assist in moving the valve member 48 to the second position, the valve member 48 is pulled upward towards the plunger member 80 to the second position by the resilient biasing member 102. While the coil assembly 30 is energized, the seal 82 remains unseated from the pilot orifice 54 due to the resilient biasing member holding the piston portion 50 in the hung position.

If during operation of the vehicle the operator has let off of the throttle closing the vehicle injectors, the fluid stops flowing from the fluid source through the valve 10 to the engine. When this occurs, the vehicle will be in a low flow or no flow condition and the pressure differential between the control chamber 52 and the point downstream of the valve seat 46 will move towards zero. As the pressure differential moves towards zero, there is no pressure force from the fluid holding the piston portion 50 against the stop 110. To prevent the valve member 48 from seating against the valve seat 46, which would create a drop in performance during the low flow or no flow condition, the resilient biasing member 102 holds the valve member 48 in the second position away from the valve seat 46. In this way, when the operator presses the throttle, fluid can flow through the main passageway 44 from the inlet port 40 through the valve seat 46 to the outlet port 42 with a lag in performance.

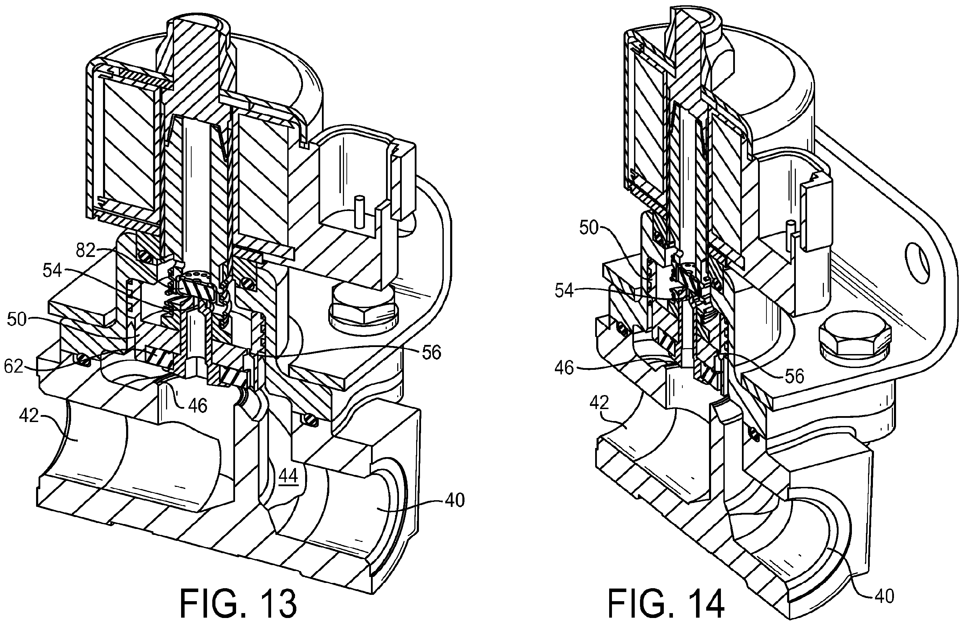

As shown in Figs. 13 and 14, when the coil assembly 30 is de-energized, for example when the vehicle is turned off, the magnetic influence of the coil assembly 30 no longer holds the plunger member 80 in the second position and the plunger member 80 moves axially downward seating the seal 82 against the pilot orifice 54. Fluid continues to flow through the main passageway 44 from the inlet port 40 through the valve seat 46 to the outlet port 42 while at the same time fluid flowing through the bleed orifice 56 begins to build in the control chamber 52. As the pressure in the control chamber 52 increases, the valve member 48 moves downward towards the first position until the valve member 48 is seated on the valve seat 46 and sealed to the valve seat by the seal 62 as shown in Fig. 10. At this point, the piston portion 50 has a larger diameter than the valve seat 46 and the pressure at the point downstream of the valve seat 46 is lower than the inlet pressure, and thus the pressure of the fluid in the control chamber 52 acts on the piston portion 50 to hold the valve member 48 in the first position blocking flow through the valve seat 46.

## Claims

1. A valve including:
a valve body (12) having an inlet port (40), an outlet port (42) in selective fluid communication with the inlet port (40) by a main passageway (44) through the valve, and a valve seat (46) surrounding the main passageway (44);
a valve member (48) mounted in the valve body (12) for movement between first and second positions respectively blocking and permitting flow through the valve seat (46), the valve member (48) having a piston portion (50) comprising a radially outer wall, the piston portion (50) separating a control chamber (52) upstream of the valve seat (46) from a point downstream of the valve seat (46), and the valve member (48) having a pilot orifice (54) through the piston portion (50) for bleeding off pressure from the control chamber (52) to the point downstream of the valve seat (46);
a plunger (80) movable between a first position blocking flow through the pilot orifice (54) and a second position allowing flow through the pilot orifice (54); and
a bleed orifice (56) extending through the piston portion (50) and in communication with the inlet port (40) and the control chamber (52) for allowing pressure from the inlet port (40) to build up in the control chamber (52) for urging the valve member (48) in the first position when the plunger (80) is in its first position, the bleed orifice (56) disposed radially inwardly of the radially outer wall of the piston portion (50);
**characterised by** a resilient biasing member (102) connecting the valve member (48) to the plunger (80) so that, when the plunger (80) is in its second position allowing flow through the pilot orifice (54), the resilient biasing member (102) resiliently biases the valve member (48) in its second position away from the valve seat (46) and towards the plunger (80), permitting flow from the inlet port (40) to the outlet port (42) via the main passageway (44) when there is low or no flow through the main passageway (44).

2. The valve according to claim 1, in which the resilient biasing member (80) is a spring (102) having one end fixed to the plunger (80) and an opposite end fixed to the valve member (48) such that the valve member (48) is hung from the plunger (80).

3. The valve according to claim 1 or 2, in which, when the plunger (80) is moved to the second position, fluid flows through the pilot orifice (54) creating a pressure differential between the control chamber (52) and the point downstream of the valve seat (46) which, in combination with the resilient biasing member (102), moves the valve member (48) to its second position allowing flow through the main passageway (44) from the inlet port (40) through the valve seat (46) to the outlet port (42).

4. The valve according to any preceding claim, wherein the resilient biasing member (102) connects an end of the valve member (48) to an adjacent end of the plunger (80), and wherein when the plunger (80) is in the second position, the resilient biasing member (102) resiliently biases the end of the valve member (48) towards the adjacent end of the plunger (80).

5. The valve according to claim 4, in which the pilot orifice (54) has a cross-sectional area that is greater than a cross-sectional area of the bleed orifice (56).

6. The valve according to claim 4 or 5, in which the pilot orifice (54) and a pilot passage (59) extend through the valve member (48) and the pilot passage opens to a bottom of the piston portion (50) interiorly of a seal (62) that seals the valve member to the valve seat (46).

7. The valve according to claim 6, in which the bleed orifice (56) opens radially outwardly of the seal (62).

8. The valve according to any preceding claim, which includes a coil (30) that when energizes moves the plunger (80) to its second position.

9. The valve according to any preceding claim, which includes a resilient member (90) that biases the plunger (80) in its first position.

10. The valve according to claim 9, in which the plunger (80) has a first portion (92) serving as a seat for an end of the resilient member (90) and a second portion (100) serving as a seat for the resilient biasing member (102).

11. The valve according to any preceding claim, which includes a seal member (70) surrounding the piston portion (50) for sealing the piston portion (50) to the valve body (12) and for serving as a bearing between the piston portion (50) and valve body (12), and preferably in which the seal member (70) has a spring portion that urges the seal radially outward.

12. The valve according to any preceding claim, in which the piston portion (50) includes a debris gland (72) on a radially outer portion thereof.

13. The valve according to any preceding claim, which includes a seal (62) that seals the valve member (48) to the valve seat (46), and preferably in which the bottom of the piston portion (50) abuts the seal (62) and includes one or more ribs (64) that engage the seal (62) creating a high stress area.

14. The valve according to claim 13, which includes an orifice member (58) having the pilot orifice (54) and pilot passage (59) extending through it, in which the orifice member (58) extends through the piston portion (50), and in which the seal (62) is sandwiched between the bottom of the piston portion (50) and a ledge of the orifice member (58).

15. A method for opening and closing a valve (10) to allow fluid flow from a fluid source through the valve (10), the valve (10) including a valve body (12) having a valve seat (46), a coil assembly (30), a plunger (80) movable by the coil assembly (30), and a valve member (48) mounted in the valve body (12) for movement between first and second positions respectively blocking and permitting flow through the valve seat (46), the valve member (48) having a piston portion (50) comprising a radially outer wall, the method including:
energizing the coil assembly (30) to move the plunger (80) from a first position blocking flow through a pilot orifice (54) in the valve member (48) to a second position allowing flow through the pilot orifice (54);
directing fluid through the pilot orifice (54) in the valve member (48) creating a pressure differential between a control chamber (52) above the valve member (48) and a point downstream of the valve seat (46) which is separated from the control chamber (52) by the piston portion (50); and
directing fluid through a bleed orifice (56) extending through the piston portion (50) and disposed radially inwardly of the radially outer wall of the piston portion (50), the bleed orifice (56) being in communication with the inlet port (40) and the control chamber (52), to allow for pressure from the inlet port (40) to build up in the control chamber (52) to urge the valve member (48) in the first position when the plunger (80) is in its first position;
the method being **characterised by** further including connecting the valve member (48) to the plunger (80) with a resilient biasing member (102) so that, when the plunger (80) is in its second position allowing flow through the pilot orifice (54),
- the pressure differential in combination with the resilient biasing member (102) moves the valve member (48) to its second position allowing flow through the valve seat (46) when the pressure differential is created, and
- the resilient biasing member (102) resiliently biases the valve member (48) in its second position away from the valve seat (46) and towards the plunger (80), permitting flow from the inlet port (40) to the outlet port (42) via the main passageway (44) when there is low or no flow through the main passageway (44).

## Patentansprüche

1. Ein Ventil umfassend:
ein Ventilkörper (12) mit einem Einlassanschluss (40), einem Auslassanschluss (42) in einer selektiven Fluidverbindung mit dem Einlassanschluss (40) über einen Hauptdurchgang (44) durch das Ventil und einen Ventilsitz (46), der den Hauptdurchgang (44) umgibt;
ein Ventilelement (48), das im Ventilkörper (12) zur Bewegung zwischen einer ersten und einer zweiten Position montiert ist, die jeweils Durchfluss durch den Ventilsitz (46) blockiert beziehungsweise ermöglicht, wobei das Ventilelement (48) einen Kolbenabschnitt (50) aufweist, umfassend eine radial äußere Wand, wobei der Kolbenabschnitt (50) eine Steuerkammer (52) stromaufwärts des Ventilsitzes (46) von einem Punkt stromabwärts des Ventilsitzes (46) abtrennt, und wobei das Ventilelement (48) eine Pilotöffnung (54) durch den Kolbenabschnitt (50) aufweist, um den Druck aus der Steuerkammer (52) zu dem Punkt stromabwärts des Ventilsitzes (46) abzulassen;
einen Kolben (80), der zwischen einer ersten Position, die den Fluss durch die Pilotöffnung (54) blockiert, und einer zweiten Position, die den Fluss durch die Pilotöffnung (54) ermöglicht, beweglich ist; und
eine Ablassöffnung (56), die sich durch den Kolbenabschnitt (50) erstreckt und in Verbindung mit dem Einlassanschluss (40) und der Steuerkammer (52) ist, um zu ermöglichen, dass sich Druck aus dem Einlassanschluss (40) in der Steuerkammer (52) aufbaut, um das Ventilelement (48) in die erste Position zu drücken, wenn sich der Kolben (80) in seiner ersten Position befindet, wobei die Ablassöffnung (56) radial nach innen von der radial äußeren Wand des Kolbenabschnittes (50) angeordnet ist;
**gekennzeichnet, durch**
ein elastisches Vorspannelement (102), das das Ventilelement (48) mit dem Kolben (80) derart verbindet, dass wenn der Kolben (50) in seiner zweiten Position ist und Durchfluss durch die Pilotöffnung (54) erlaubt, das elastisches Vorspannelement (102) das Ventilelement (48) in seine zweite Position weg von dem Ventilsitz (46) und hin zum Kolben (80) elastisch vorspannt, wobei Durchfluss von dem Einlassanschluss (40) zum Auslassanschluss (42) durch den Hauptdurchgang (44) ermöglicht wird, wenn ein geringer oder kein Durchfluss durch den Hauptdurchgang (44) vorliegt.

2. Das Ventil nach Anspruch 1, wobei das elastische Vorspannelement (80) eine Feder (102) ist, die ein Ende am Kolben (80) und ein entgegengesetztes Ende am Ventilelement (48) befestigt hat, so dass das Ventilelement (48) am Kolben (80) aufgehängt wird.

3. Das Ventil nach Anspruch 1 oder 2, wobei, wenn der Kolben (80) in die zweite Position bewegt wird, das Fluid durch die Pilotöffnung (54) strömt und eine Druckdifferenz zwischen der Steuerkammer (52) und dem Punkt stromabwärts des Ventilsitzes (46) erzeugt, die in Kombination mit dem elastischen Vorspannelement (102) das Ventilelement (48) in seine zweite Position bewegt und einen Durchfluss durch den Hauptdurchgang (44) von dem Einlassanschluss (40) durch den Ventilsitz (46) zum Auslassöffnung (42) ermöglicht.

4. Das Ventil nach einem vorhergehenden Anspruch, wobei das elastisches Vorspannelement (102) ein Ende des Ventilelements (48) mit einem angrenzenden Ende des Kolbens (80) verbindet, und wobei, wenn der Kolben (80) in der zweiten Position ist, das elastische Vorspannelement (102) das Ende des Ventilelements (48) gegen das angrenzende Ende des Kolbens (80) elastisch vorspannt.

5. Das Ventil nach Anspruch 4, wobei die Pilotöffnung (54) eine Querschnittsfläche aufweist, die größer ist als eine Querschnittsfläche der Ablassöffnung (56).

6. Das Ventil nach Anspruch 4 oder 5, wobei sich die Pilotöffnung (54) und ein Pilotdurchgang (59) durch das Ventilelement (48) erstrecken und der Pilotdurchgang sich zu einem Boden des Kolbenabschnitts (50) innerhalb einer Dichtung (62) öffnet, die das Ventilelement gegenüber dem Ventilsitz (46) abdichtet.

7. Das Ventil nach Anspruch 6, wobei sich die Ablassöffnung (56) radial außerhalb der Dichtung (62) öffnet.

8. Das Ventil nach einem vorhergehenden Anspruch, welches eine Spule (30) umfasst, die bei Erregung den Kolben (80) in seine zweite Position bewegt.

9. Das Ventil nach einem vorhergehenden Anspruch, welches ein elastisches Element (90) umfasst, das den Kolben (80) in seiner ersten Position vorspannt.

10. Das Ventil nach Anspruch 9, wobei der Kolben (80) einen ersten Abschnitt (92) aufweist, der als Sitz für ein Ende des elastischen Elements (90) dient, und einen zweiten Abschnitt (100) aufweist, der als Sitz für das elastische Vorspannelement (102) dient.

11. Das Ventil nach einem vorhergehenden Anspruch, welches ein Dichtungselement (70) umfasst, das den Kolbenabschnitt (50) umgibt, um den Kolbenabschnitt (50) gegenüber dem Ventilkörper (12) abzudichten und als Lager zwischen dem Kolbenabschnitt (50) und dem Ventilkörper (12) zu dienen, und wobei vorzugsweise das Dichtungselement (70) einen Federabschnitt aufweist, der die Dichtung radial nach außen drückt.

12. Das Ventil nach einem vorhergehenden Anspruch, wobei der Kolbenabschnitt (50) eine Schmutzstopfbuchse (72) an einem radial äußeren Abschnitt davon umfasst.

13. Das Ventil nach einem vorhergehenden Anspruch, das eine Dichtung (62) umfasst, die das Ventilelement (48) gegenüber dem Ventilsitz (46) abdichtet, und wobei vorzugsweise der Boden des Kolbenabschnitts (50) an der Dichtung (62) anliegt und eine oder mehrere Rippen (64) umfasst, die in die Dichtung (62) eingreifen und einen Bereich hoher Spannung erzeugen.

14. Ventil nach Anspruch 13, das ein Öffnungselement (58) umfasst, durch die sich die Pilotöffnung (54) und der Pilotdurchgang (59) erstrecken, wobei sich das Öffnungselement (58) durch den Kolbenabschnitt (50) erstreckt und wobei die Dichtung (62) zwischen dem Boden des Kolbenabschnitts (50) und einem Vorsprung des Öffnungselements (58) sandwichartig angeordnet ist.

15. Verfahren zum Öffnen und Schließen eines Ventils (10), um einen Fluidstrom von einer Fluidquelle durch das Ventil (10) zu ermöglichen, wobei das Ventil (10) einen Ventilkörper (12) mit einem Ventilsitz (12), einer Spulenanordnung (30), einem durch die Spulenanordnung (30) beweglichen Kolben (80), und
einem im Ventilkörper (12) montierten Ventilelement (48) zum Bewegen zwischen erster und zweiter Positionen, die jeweils den Strom durch den Ventilsitz (46) blockieren beziehungsweise zulassen, wobei das Ventilelement (48) einen Kolbenabschnitt (50) hat, der eine radial äußere Wand aufweist,
wobei das Verfahren umfasst:
Erregen der Spulenanordnung (30), um den Kolben (80) von einer ersten Position, die einen Durchfluss durch eine Pilotöffnung (54) in dem Ventilelement (48) blockiert, in eine zweite Position zu bewegen, die einen Durchfluss durch die Pilotöffnung (54) erlaubt;
Leiten von Fluid durch die Pilotöffnung (54) in dem Ventilelement (48), wodurch eine Druckdifferenz zwischen einer Steuerkammer (52) oberhalb des Ventilelements (48) und einem Punkt stromabwärts des Ventilsitzes (46) erzeugt wird, der durch den Kolbenabschnitt (50) von der Steuerkammer (52) abgetrennt ist; und
Leiten von Fluid durch eine Ablassöffnung (56), die sich durch den Kolbenabschnitt (50) erstreckt und radial nach innen von der radial äußeren Wand des Kolbenabschnittes (50) angeordnet ist, wobei die Ablassöffnung (56) in Verbindung mit dem Einlassanschluss (40) und der Steuerkammer (52) ist, um zu ermöglichen, dass sich Druck aus dem Einlassanschluss (40) in der Steuerkammer (52) aufbaut, um das Ventilelement (48) in die erste Position zu drücken, wenn sich der Kolben (80) in seiner ersten Position befindet;
**dadurch gekennzeichnet, dass** das Verfahren ferner umfasst
Verbinden des Ventilelements (48) zu dem Kolben (80) mit einem elastischen Vorspannelement (102), derart dass wenn der Kolben (50) in seiner zweiten Position ist und Durchfluss durch die Pilotöffnung (54) erlaubt,
- die Druckdifferenz in Kombination mit dem elastischen Element (102) das Ventilelement (48) in seine zweite Position bewegt und einen Durchfluss durch den Ventilsitz (46) erlaubt, wenn die Druckdifferenz erzeugt wird, und
- das elastisches Vorspannelement (102) das Ventilelement (48) in seine zweite Position weg von dem Ventilsitz (46) und hin zum Kolben (80) elastisch vorspannt, wobei Durchfluss von dem Einlassanschluss (40) zum Auslassanschluss (42) durch den Hauptdurchgang (44) ermöglicht wird, wenn ein geringer oder kein Durchfluss durch den Hauptdurchgang (44) vorliegt.

## Revendications

1. Soupape comportant :
un corps de soupape (12) ayant un port d'entrée (40), un port de sortie (42) en communication fluidique sélective avec le port d'entrée (40) par un passage principal (44) à travers la soupape, et un siège de soupape (46) entourant le passage principal (44) ;
un élément de soupape (48) monté dans le corps de soupape (12) pour se déplacer entre des première et deuxième positions bloquant et permettant respectivement un écoulement à travers le siège de soupape (46), l'élément de soupape (48) ayant une partie piston (50) comprenant une paroi radialement externe, la partie piston (50) séparant une chambre de commande (52) en amont du siège de soupape (46) d'un point en aval du siège de soupape (46), et l'élément de soupape (48) ayant un orifice pilote (54) à travers la partie piston (50) pour évacuer la pression de la chambre de commande (52) au point en aval du siège de soupape (46) ;
un plongeur (80) mobile entre une première position bloquant l'écoulement à travers l'orifice pilote (54) et une deuxième position permettant l'écoulement à travers l'orifice pilote (54) ; et
un orifice d'évacuation (56) s'étendant à travers la partie piston (50) et en communication avec le port d'entrée (40) et la chambre de commande (52) pour permettre à la pression provenant du port d'entrée (40) de s'accumuler dans la chambre de commande (52) pour pousser l'élément de soupape (48) dans la première position lorsque le plongeur (80) se trouve dans sa première position, l'orifice d'évacuation (56) étant disposé radialement vers l'intérieur de la paroi radialement externe de la partie piston (50) ;
**caractérisée par**
un élément de sollicitation élastique (102) reliant l'élément de soupape (48) au plongeur (80) de sorte que, lorsque le plongeur (80) se trouve dans sa deuxième position permettant l'écoulement à travers l'orifice pilote (54), l'élément de sollicitation élastique (102) sollicite de manière élastique l'élément de soupape (48) dans sa deuxième position loin du siège de soupape (46) et vers le plongeur (80), permettant l'écoulement du port d'entrée (40) au port de sortie (42) via le passage principal (44) lorsqu'il y a peu ou pas d'écoulement à travers le passage principal (44).

2. Soupape selon la revendication 1, dans laquelle l'élément de sollicitation élastique (80) est un ressort (102) ayant une extrémité fixée au plongeur (80) et une extrémité opposée fixée à l'élément de soupape (48) de sorte que l'élément de soupape (48) soit suspendu au plongeur (80).

3. Soupape selon la revendication 1 ou 2, dans laquelle, lorsque le plongeur (80) est déplacé vers la deuxième position, le fluide s'écoule à travers l'orifice pilote (54), créant un différentiel de pression entre la chambre de commande (52) et le point en aval du siège de soupape (46) qui, en combinaison avec l'élément de sollicitation élastique (102), déplace l'élément de soupape (48) vers sa deuxième position permettant l'écoulement à travers le passage principal (44) du port d'entrée (40) à travers le siège de soupape (46) au port de sortie (42).

4. Soupape selon l'une des revendications précédentes, dans laquelle l'élément de sollicitation élastique (102) relie une extrémité de l'élément de soupape (48) à une extrémité adjacente du plongeur (80), et où, lorsque le plongeur (80) se trouve dans la deuxième position, l'élément de sollicitation élastique (102) sollicite de manière élastique l'extrémité de l'élément de soupape (48) vers l'extrémité adjacente du plongeur (80).

5. Soupape selon la revendication 4, dans laquelle l'orifice pilote (54) a une surface de section transversale qui est supérieure à une surface de section transversale de l'orifice d'évacuation (56).

6. Soupape selon la revendication 4 ou 5, dans laquelle l'orifice pilote (54) et un passage pilote (59) s'étendent à travers l'élément de soupape (48) et le passage pilote s'ouvre sur une partie inférieure de la partie piston (50) à l'intérieur d'un joint d'étanchéité (62) qui assure l'étanchéité de l'élément de soupape par rapport au siège de soupape (46).

7. Soupape selon la revendication 6, dans laquelle l'orifice d'évacuation (56) s'ouvre radialement vers l'extérieur du joint d'étanchéité (62).

8. Soupape selon l'une des revendications précédentes, qui comporte une bobine (30) qui, lorsqu'elle est excitée, déplace le plongeur (80) vers sa deuxième position.

9. Soupape selon l'une des revendications précédentes, qui comporte un élément élastique (90) qui sollicite le plongeur (80) dans sa première position.

10. Soupape selon la revendication 9, dans lequel le plongeur (80) a une première partie (92) servant de siège à une extrémité de l'élément élastique (90) et une deuxième partie (100) servant de siège à l'élément de sollicitation élastique (102).

11. Soupape selon l'une des revendications précédentes, qui comporte un élément d'étanchéité (70) entourant la partie piston (50) pour assurer l'étanchéité de la partie piston (50) par rapport au corps de soupape (12) et pour servir de palier entre la partie piston (50) et le corps de soupape (12), et de préférence où l'élément d'étanchéité (70) a une partie ressort qui pousse le joint d'étanchéité radialement vers l'extérieur.

12. Soupape selon l'une des revendications précédentes, dans laquelle la partie piston (50) comporte un presse-étoupe pour débris (72) sur une partie radialement externe de celle-ci.

13. Soupape selon l'une des revendications précédentes, qui comporte un joint d'étanchéité (62) qui assure l'étanchéité de l'élément de soupape (48) par rapport au siège de soupape (46), et de préférence, où la partie inférieure de la partie piston (50) vient en butée contre le joint d'étanchéité (62) et comporte une ou plusieurs nervure(s) (64) qui s'engage/s'engagent avec le joint d'étanchéité (62) créant une zone de contrainte élevée.

14. Soupape selon la revendication 13, qui comporte un élément à orifice (58) à travers lequel s'étendent l'orifice pilote (54) et le passage pilote (59), où l'élément à orifice (58) s'étend à travers la partie piston (50), et où le joint d'étanchéité (62) est pris en tenaille entre la partie inférieure de la partie piston (50) et un rebord de l'élément à orifice (58).

15. Procédé d'ouverture et de fermeture d'une soupape (10) pour permettre à un fluide de s'écouler d'une source de fluide à travers la soupape (10), la soupape (10) comportant un corps de soupape (12) ayant un siège de soupape (46), un ensemble bobine (30), un plongeur (80) pouvant être déplacé par l'ensemble bobine (30), et
un élément de soupape (48) monté dans le corps de soupape (12) pour se déplacer entre des première et deuxième positions bloquant et permettant respectivement l'écoulement à travers le siège de soupape (46), l'élément de soupape (48) ayant une partie piston (50) comprenant une paroi radialement externe,
le procédé comportant le fait :
d'exciter l'ensemble bobine (30) pour déplacer le plongeur (80) d'une première position bloquant l'écoulement à travers un orifice pilote (54) dans l'élément de soupape (48) à une deuxième position permettant l'écoulement à travers l'orifice pilote (54) ;
de diriger le fluide à travers l'orifice pilote (54) dans l'élément de soupape (48), créant un différentiel de pression entre une chambre de commande (52) au-dessus de l'élément de soupape (48) et un point en aval du siège de soupape (46) qui est séparé de la chambre de commande (52) par la partie piston (50) ; et
de diriger le fluide à travers un orifice d'évacuation (56) s'étendant à travers la partie piston (50) et disposé radialement vers l'intérieur de la paroi radialement externe de la partie piston (50), l'orifice d'évacuation (56) étant en communication avec le port d'entrée (40) et la chambre de commande (52), pour permettre à la pression provenant du port d'entrée (40) de s'accumuler dans la chambre de commande (52) afin de pousser l'élément de soupape (48) dans la première position lorsque le plongeur (80) se trouve dans sa première position ;
le procédé étant **caractérisé en ce qu'**il comporte en outre le fait
de relier l'élément de soupape (48) au plongeur (80) avec un élément de sollicitation élastique (102) de sorte que, lorsque le plongeur (80) se trouve dans sa deuxième position permettant l'écoulement à travers l'orifice pilote (54),
- le différentiel de pression en combinaison avec l'élément de sollicitation élastique (102) déplace l'élément de soupape (48) vers sa deuxième position permettant l'écoulement à travers le siège de soupape (46) lorsque le différentiel de pression est créé, et
- l'élément de sollicitation élastique (102) sollicite de manière élastique l'élément de soupape (48) dans sa deuxième position loin du siège de soupape (46) et vers le plongeur (80), permettant l'écoulement du port d'entrée (40) au port de sortie (42) via le passage principal (44) lorsqu'il y a peu ou pas d'écoulement à travers le passage principal (44).
